# EUROPEAN PATENT SPECIFICATION

(11) **EP 3 902 663 B1**
(45) Date of publication and mention of the grant of the patent: **08.02.2023**
(21) Application number: 19835494.6
(22) Date of filing: 12.12.2019
(51) Int. Cl.: B29C 51/30, B29C 51/36

(54) **THERMOFORMING ASSEMBLY FOR MAKING CONTAINERS**
THERMOFORMENDE ANORDNUNG ZUM HERSTELLEN VON BEHÄLTERN
ENSEMBLE DE THERMOFORMAGE POUR LA FABRICATION DE RÉCIPIENTS

(30) Priority: 27.12.2018 IT 201800021103
(43) Date of publication of application: 03.11.2021
(73) Proprietor: Tulini Macchine S.r.l., 25030 Paratico (BS) (IT)
(72) Inventor: TULINI, Giancarlo, 24060 Villongo (Bergamo) (IT)
(74) Representative: Tansini, Elio Fabrizio
(86) International application number: PCT/IB2019/060698
(87) International publication number: WO 2020/136486

(56) References cited:
- DE-A1-102012 018 974
- US-A- 3 115 678
- US-A- 4 637 789
- US-A- 5 192 560

## Description

The present invention relates to a thermoforming assembly for making containers. Particularly, the invention is conveniently usable to make containers in the form of a tray, starting from a semi-finished product in the form of a continuous strip of polyethylene or other thermoformable plastic material. The containers that can be made by the present invention are particularly suitable for packaging food products.

Related assembles and methods for making containers are described in the prior art documents DE102012-018974A1, US4637789A and US3115678A.

A thermoforming assembly essentially comprises feeding devices which provide to translate, normally by a step-by-step movement, a strip-shaped semi-finished product of plastic material according to a predetermined forwarding path. Along the forwarding path, normally below the strip-shaped semi-finished product, at least one forming mould defining a forming cavity of appropriate dimensions is installed.

At the forming mould the strip-shaped semi-finished product, brought to a suitable temperature by heating devices operating on the forming mould itself and / or immediately upstream, is subjected to the action of forming devices which, by a positive and / or negative pressure pneumatic action, and / or with the aid of mechanical thrusters, provide for its deformation making it adhere against the internal surfaces of the forming cavity.

The segment of strip-shaped semi-finished product affected by the action of the forming devices is therefore shaped making a container in the form of a tray, having geometrical and dimensional characteristics compliant with those of the forming cavity.

Downstream from the forming mould, a cutting assembly can be arranged to separate from the strip-shaped semi-finished product the obtained individual containers.

It may also be provided that between the forming mould and the cutting assembly a loading station for introducing the products into the containers and a sealing assembly for applying a closure element on the upper edges of the container can be arranged along the forwarding path.

Where, during the serial packaging of products having different dimensions from one another, it is required to modify the dimensions of the container in which the products are to be inserted, the known solutions require the replacement of the forming mould.

In addition to high costs for retooling and calibrating the line, this operation involves long processing downtimes, incompatible with production flexibility needs that can occur in situations where the dimensional characteristics of the products change frequently.

For example, in the packaging of hams or other cuts of meat intended for slicing, it is required for each ham, pre-shaped according to a prismatic conformation to form a so-called "brick", to be enclosed in a vacuum container together with a sort of containment mould formed by half-shells and / or modular plates, which maintain its given conformation upon pressing, during the standby phases in the cold chamber provided for in the production cycle before slicing. This containment mould must be capable of adapting to the lengths presented each time by the brick inserted into it. At the end of the cold chamber resting cycle, each brick must be removed from the vacuum bag to allow the removal and recovery of the containment mould, and closed again in a vacuum bag to be shipped to the sites where the slicing, portioning and packaging operations for distribution to the final consumer are carried out.

The object of the present invention is therefore to improve the prior art, particularly by increasing the operating flexibility of the thermoforming assembly, and of the processing line wherein it may be inserted.

In this regard, in accordance with the present invention, the Applicant found that by adopting forming moulds wherein at least one of the side walls delimiting the forming cavity is movable and positionable according to the needs, it is possible to significantly increase the production flexibility. Particularly, it becomes possible to adapt the thermoforming assembly also to operative situations wherein, during the sequential packaging of individual products, each product has different dimensional characteristics with respect to the previous and / or subsequent product.

More particularly, it is object of the present invention a thermoforming assembly for making containers, according to claim 1.

In accordance with a further aspect, the invention relates to a product packaging line, comprising the forming assembly mentioned above, as defined in claim 3.

A system comprising the packaging line mentioned above is also proposed, as defined in claim 9.

In accordance with a further aspect of the invention, a process for making containers for packaging products is proposed, as in claim 13.

Employing a movable wall within the forming mould allows to modify, even in real time during production, at least one of the dimensions in width or length of the obtained containers, particularly their longitudinal development, to adapt them each time to the dimensional variations, particularly in length, of the product to be packaged.

The invention therefore allows to carry out the packaging of products which, for different reasons, may have different lengths from one another. Each product can therefore be housed in a casing of adequate structural consistency, specifically made according to the dimensions of the product itself.

With particular reference, purely by way of example, to the processing of hams or other food products for slicing, such a casing can easily be provided with a conformation and structural consistency suitable for maintaining the appropriate shape of the brick, more effectively counteracting the tendency of the same to undergo deformations and swellings that would cause their end and / or side surfaces to assume an unwanted shape and / or a shape that is not suitable for carrying out subsequent processing. The brick can therefore reach the slicing sites in the best conditions to minimize processing wastes.

Moreover, the need to impose on the food product the additional handlings required in the known art to remove it from the containment mould and close it in a vacuum bag is eliminated, operations which, in addition to negatively impacting the production costs, inevitably involve risks of product contamination.

The need to use the containment moulds and manage the stock turnover and the sterilization and treatment operations at each use is also eliminated.

The employment of personnel assigned to enveloping, moving and sanitizing the moulds is also reduced.

Preferential embodiments of the invention may provide for the presence of at least one of the technical solutions set forth in one or more of the dependent claims. Particularly, in at least one of the above aspects, one or more of the following preferred characteristics may be provided.

Preferably, the movable wall extends according to its own development plane and is translatable according to a direction perpendicular to said development plane.

Preferably, the movable wall is translatable parallel to said forwarding path.

Preferably, a first actuator assembly operating on the movable wall is also provided to move it towards and away from the other side wall belonging to the second pair.

Preferably, the sealing assembly comprises: a sealing matrix defining a sealing compartment perimetrically delimited by a first pair of respectively opposed side abutments, and a second pair of respectively opposed side abutments; a sealing abutment cooperating with the sealing matrix to thrust the strip-shaped semi-finished product against the side abutments; wherein at least one of the side abutments belonging to the second pair is a movable abutment, positionable towards and away from the other side abutment belonging to the second pair, to vary the dimension of the sealing compartment.

Preferably, the movable abutment is translatable parallel to said forwarding path.

Preferably, a second actuator assembly operating on the movable abutment to move it towards and away from the other side abutment belonging to the second pair is also provided.

Preferably, a cutting assembly operating along the forwarding path downstream from the sealing assembly is also provided, and configured to separate each container from the strip-shaped semi-finished product.

Preferably, the cutting assembly comprises a cutting edge operating along a cutting line transverse to the forwarding path and positionable along the forwarding path itself.

Preferably, a third actuator assembly configured to move the cutting edge parallel to the forwarding path is also provided.

Preferably, the strip-shaped semi-finished product is moved according to a step-by-step movement along the forwarding path.

Preferably, an auxiliary loading assembly operatively arranged along the forwarding path between the loading station and the sealing assembly is also provided, and configured to determine the introduction of a shaping insert into each container.

Preferably, the auxiliary loading assembly comprises a feeding unit configured to feed a continuous element, and a cutting unit arranged downstream from the feeding unit and configured to cut the continuous element into pieces of a desired length.

Preferably, the auxiliary loading assembly comprises a shaping unit installed upstream or downstream from the auxiliary cutting unit. Preferably, the electronic control unit is also operatively connected to the second actuator assembly to command the movement of the movable abutment in response to the signal indicating the length detected on each product.

Preferably, said electronic control unit is also operatively connected to the third actuator assembly to command the movement of the cutting edge in response to the signal indicating the measurement detected on each product.

Preferably, the electronic control unit is configured to command the movement of the movable wall and / or movable abutment and / or cutting edge during the forwarding phases of the step-by-step movement.

Preferably, measuring devices combined with the feeding unit are also provided, wherein the electronic control unit is configured to detect a longitudinal measurement of the continuous element delivered through the feeding unit, and to command the actuation of the cutting unit to obtain a piece of a length substantially equal or correlated to the length of the product carried by the container wherein the shaping insert must be inserted.

Preferably, before hermetically sealing the container, the following actions are actuated: introducing into a sealing compartment the container housing the product; expelling air from the sealing compartment.

Preferably, the product comprises a food portion, particularly a cut of meat, particularly a ham.

Preferably, arranging the product comprises pressing a food portion into a pressing mould to shape it according to a substantially parallelepiped configuration, having a width and height corresponding to the dimensions of the pressing mould, and a variable length depending on the volume of the food portion.

Preferably, after sealing, the following actions are actuated: stationing of the product housed in the container at a controlled temperature; extraction of the product from the container; slicing of the product.

Preferably, preparing the container comprises making said container by a thermoforming treatment of a strip-shaped semi-finished product of plastic material.

Preferably, the thermoforming treatment comprises: moving with respect to one another two respectively opposed side walls of a forming mould to position them at a mutual distance substantially corresponding to the length measured on the product; thermoforming the strip-shaped semi-finished product in the forming mould.

Preferably, hermetically sealing the container comprises: moving with respect to one another two respectively opposed side abutments of a sealing matrix to position them at a mutual distance substantially corresponding to the length measured on the pressed and shaped product; positioning into the sealing matrix the container housing on the pressed and shaped product; sealing a thermoplastic covering sheet against the strip-shaped semi-finished product according to a closed line circumscribing said housing.

Preferably, after the hermetic sealing, at least one cutting action is carried out, preferably a first and a second cutting action, of the strip-shaped semi-finished product to separate the container from the strip-shaped semi-finished product.

Preferably, the forming mould and the sealing matrix are consecutively arranged along a forwarding path of the strip-shaped semi-finished product.

Preferably, the strip-shaped semi-finished product is moved along the forwarding path according to a step-by-step movement comprising stopping phases each interposed between two forwarding phases.

Preferably, the mutual movement of the side walls of the forming mould is actuated during the forwarding phases of the step-by-step movement.

Preferably, said at least one cutting action is preceded by a translation of a cutting edge along the forwarding path to position it at a respective wall of the container.

Preferably, the mutual movement of the side walls of the forming mould is obtained by translating only one of said side walls.

Preferably, the mutual movement of the side abutments of the sealing matrix is obtained by translating only one of said side abutments. Preferably, the mutual movement of the side walls of the forming mould is actuated parallel to the forwarding path.

Preferably, the mutual movement of the side abutments of the sealing matrix is actuated parallel to the forwarding path.

Preferably, the mutual movement of the side abutments of the sealing matrix is performed during forwarding phases of the step-by-step movement.

Preferably, the translation of the cutting edge that precedes at least one of the cutting actions is performed during one of the forwarding phases of the step-by-step movement.

Preferably, the translation of the cutting edge that precedes at least one of the cutting actions is performed during one of the stopping phases of the step-by-step movement.

Preferably, after introducing the product and before sealing, the introduction of a shaping insert into each container is also actuated.

Preferably, the shaping insert is obtained by a cutting action performed on a continuous element.

Preferably, the shaping insert is made in the form of a flat foil or slab, or with a convex profile, at least on one of its surfaces facing the outside of the housing defined by the container.

Preferably, a surface of the shaping insert facing the housing of the container is substantially flat or with a concave profile.

Preferably, the shaping insert has widenings along its respectively opposed longitudinal edges, oriented parallel to the forwarding path.

Preferably, said widenings are joined to a lower surface of the shaping insert by arcuate joint areas with a concave profile.

Preferably, the shaping insert has a constant thickness along its transverse development.

Preferably, the shaping insert has curvilinear joint portions along its respectively opposed longitudinal edges.

Preferably, the curvilinear joint portions are made by a hot forming process.

For the purposes of the present invention, unless otherwise indicated, with the term "correspondents" and its derivatives it must be understood that the internal measurements of the housing compartment are substantially equal to those of the possibly pressed and shaped product, net of the thickness of any insert inserted in the same housing compartment together with the product itself. In other words, when the container is sealed the product results preferably enclosed within it in a substantial absence of clearances.

Further characteristics and advantages of the present invention will become more apparent from the exemplary, and therefore non-limiting, description of a preferred but not exclusive embodiment of a thermoforming assembly for making containers, as illustrated in the appended drawings, wherein:
- Fig. 1 schematically shows in a perspective view a packaging line integrating a forming assembly according to the present invention;
- Fig. 2 shows in a top view a measuring assembly operating along a band conveyor;

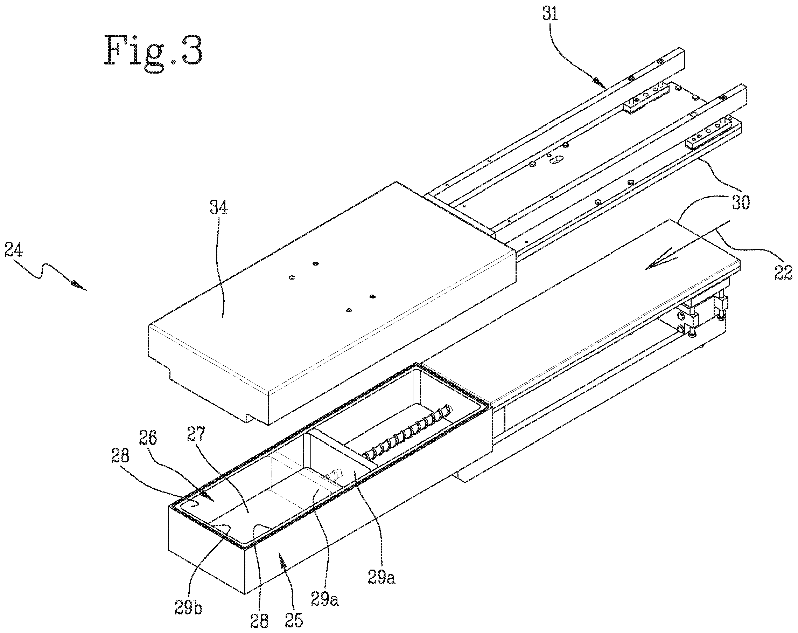

- Fig. 3 shows in a perspective view a thermoforming assembly being part of the packaging line;

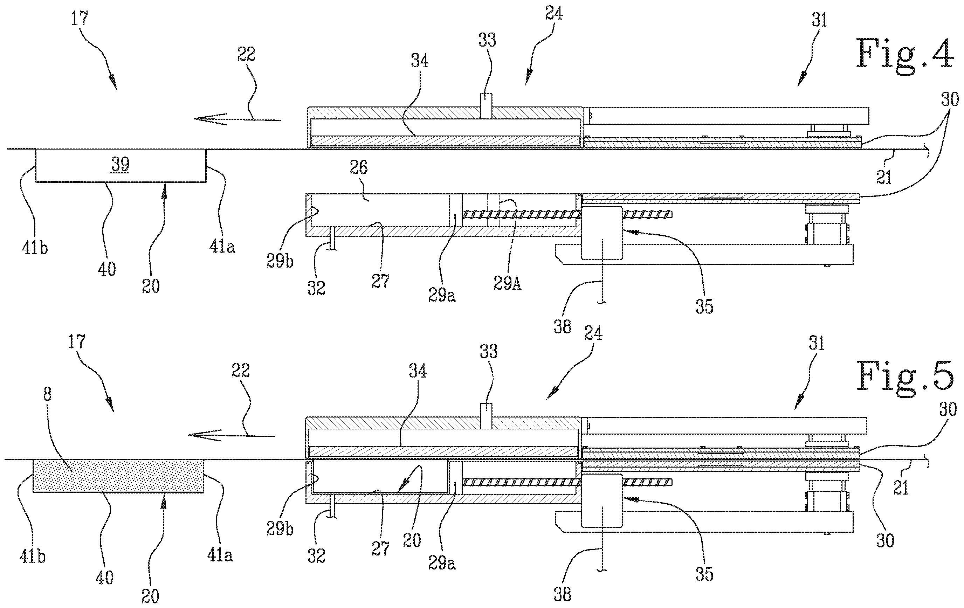

- Fig. 4 schematically shows in a longitudinal section the thermoforming assembly in a rest condition;
- Fig. 5 shows the thermoforming assembly of Fig. 4, during the thermoforming of a container;

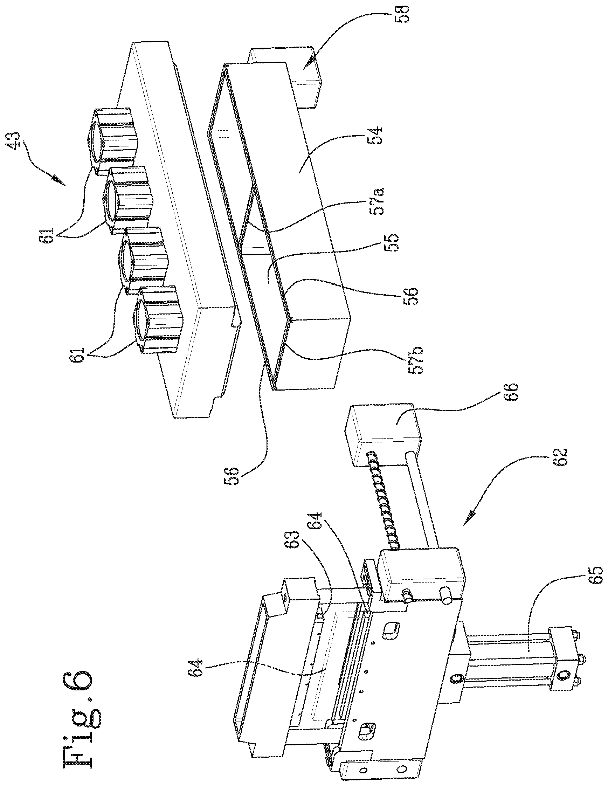

- Fig. 6 shows in a perspective view a sealing assembly and a cutting assembly being part of the packaging line;

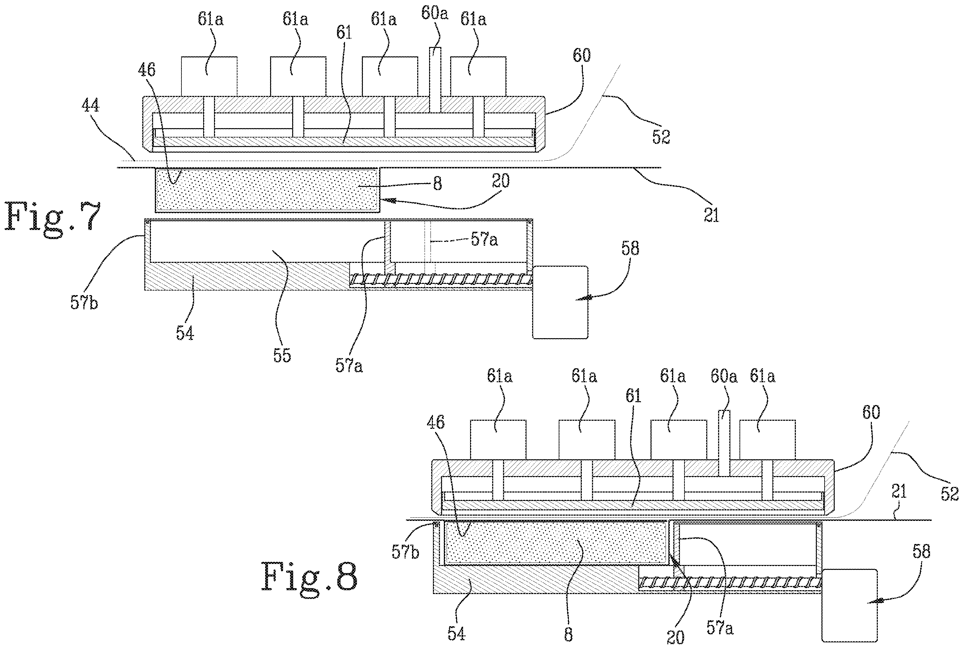

- Fig. 7 schematically shows in a longitudinal section a sealing assembly in a rest condition;
- Fig. 8 shows the sealing assembly of Fig. 7, during the sealing of a container;

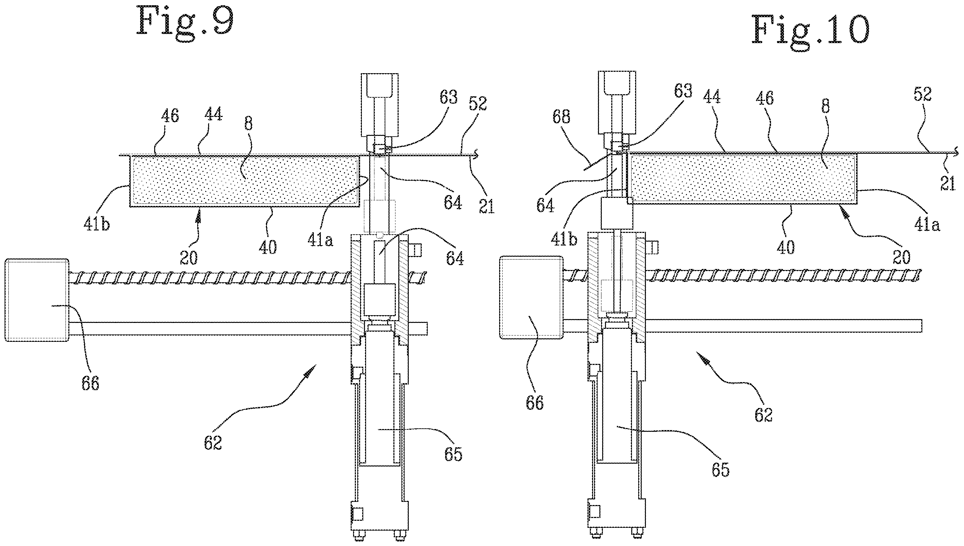

- Fig. 9 schematically shows in a longitudinal section a cutting assembly during the execution of a first cut adjacent to a rear wall of the container;
- Fig. 10 shows the cutting assembly of Fig. 9, arranged for the execution of a second cut adjacent to a front wall of the container;

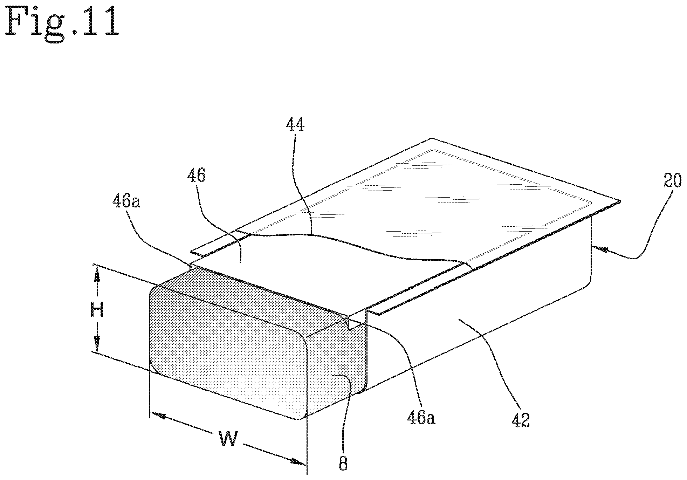

- Fig. 11 is a cutaway perspective view illustrating a packaged product in accordance with the present invention;

With reference to the attached figures, 1 indicates a product packaging line, integrating a thermoforming assembly according to the present invention, generally indicated as 2.

In the described example, the packaging line 1 is configured for packaging food portions, more specifically hams. The invention can also be conveniently applied for packaging cuts of meat of another type, for example not sausage slicing products or even products of a different type.

In the illustrated example, the packaging line 1 equips a packaging system 3 which provides one or more preparation stations 4, in each of which the hams 2, previously cured, are prepared in a per se known manner to be subjected to a pressing treatment. In a per se known manner, the preparation can be performed manually by at least one first operator 5 assigned to the respective preparation station 4, and provide for boning, where not carried out before curing, and / or the removal of rind and fat in excess. At the end of the preparation each ham 2, having the characteristic "chicken leg" round shape, is suitable for being subjected to a pressing treatment, whose purpose is to give it a regular conformation, suitable for a subsequent treatment in an automatic slicing line.

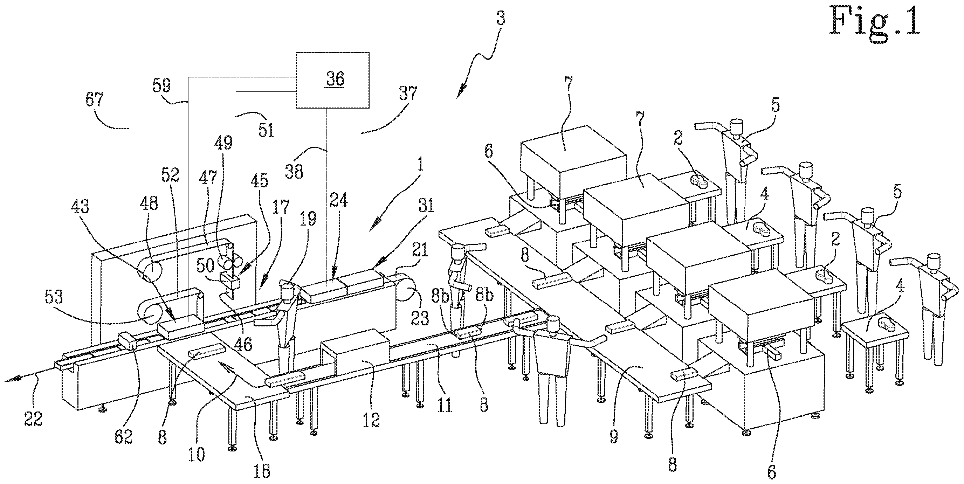

For this purpose, the ham 2 is introduced into the pressing mould 6 of a suitable press 7, to be constrained to assume a substantially parallelepiped configuration, to form a so-called "brick" 8. In Fig. 1 a plurality of presses 7 are shown, each associated with a respective preparation station 4. The presses 7 are not further described since they can be made in a per se known manner.

The bricks 8 exiting the various presses 7 are preferably deposited on a collecting table 9 associated with a product feeding path 10 heading the packaging line 1. The product feeding path 10 preferably comprises a band conveyor 11 which provides to send the bricks 8 towards the packaging line 1.

Each brick 8 deposited on the collecting table 9 has a predetermined width W and height H. Such dimensions in height H and width W correspond to the internal dimensions, respectively in width and height, of the pressing mould 6, and result preferably equal for all the produced bricks 8.

Moreover, each brick 8 has an indeterminate dimension in length L, meaning that such dimension can vary from one brick 8 to another. Having width W and height H as constant value, the length L of each brick 8 is in fact directly proportional to the volume of the ham 2 from which each brick 8 was obtained.

In accordance with the present invention, it is provided that the length L of each of the bricks 8 obtained by pressing is measured - and stored if necessary - to be used as a process parameter in the subsequent processings carried out along the packaging line 1.

The measurement on the individual bricks 8 can be carried out for example in a measurement assembly 12 operating along the product feeding path 10. Preferably, the bricks 8 pass through the measuring assembly 12 during the translation along the band conveyor 11.

The measuring assembly 12 can for example comprise optical detectors, cameras, photocells 13 or feelers configured to operate on the individual bricks 8 to measure their length L.

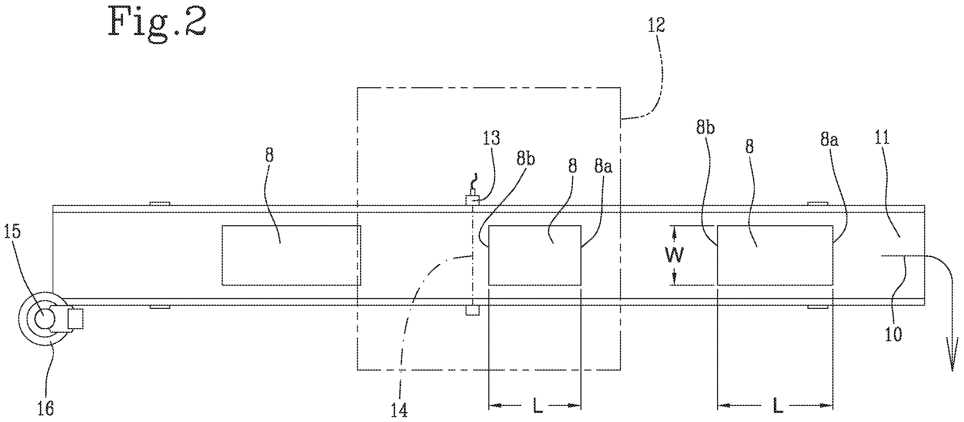

By way of example, one or more photocells 13 can be provided which, as shown schematically in Fig. 2, operate at a fixed reading line 14 along the band conveyor 11 to spot the passage of the front 8a and rear 8b ends of each brick 8, facing respectively in a same and opposite direction to the forwarding direction of the same along the feeding path 11.

The length L of the brick 8 can be determined as a function of the linear translation performed by the band conveyor 11, from the moment in which the light beam emitted by the photocell 13 along the reading line 14 is respectively intercepted and freed by the brick 8 which translates along the band conveyor 11. The linear translation performed by the band conveyor 11 can be detected, for example, by an encoder 15 associated with a drive motor 16 or a sendback roller of the band itself.

In possible alternative variants, the length L of each brick 8 can be detected by cameras and / or mechanical feelers. Optionally, mechanical or other types of detectors associated with the pressing mould 6 operating in each of the presses 7 can also be used.

Preferably, the feeding path 10 converges on the packaging line 1 at a loading station 17 being part of the packaging line itself.

In this regard, between the packaging line 1 and the band conveyor 11 a transfer table 18 can be interposed from which, optionally by manual action of a second operator 19 or a robotic arm, the individual bricks 8 are picked from the product feeding path 10 to be transferred each into a respective container 20 carried by the packaging line 1, at the loading station 17.

Each container 20 arrives at the loading station 17 due to the action of feeding devices operating on a continuous strip-shaped semi-finished product 21, preferably of plastic material, for example polyethylene, or other thermoformable material.

The feeding devices, not shown in the drawings since they can be made in a known way, can for example comprise a band conveyor, belts or chains, and are configured to move the strip-shaped semi-finished product 21 along an forwarding path 22 which passes through the loading station 17. Preferably, the strip-shaped semi-finished product 21, initially in the form of a flat section layer wound on a first feeding reel 23, is advanced along the forwarding path 22 according to a step-by-step movement, comprising stopping phases each interposed between two forwarding phases.

The introduction of the bricks 8 into the respective containers 20 can take place concurrently with the stopping phases and / or during the forwarding phases of the step-by-step movement.

Downstream from the feeding reel 23, before reaching the loading station 17, the strip-shaped semi-finished product 21 meets a thermoforming assembly 24 configured to obtain each of the containers 20 by actuating a thermoforming treatment on the strip-shaped semi-finished product 21. For this purpose, the thermoforming assembly 24 comprises at least one forming mould 25 positioned along the forwarding path 22. Within the forming mould 25 there is defined a forming cavity 26 delimited by a preferably horizontal base wall 27, a first pair of respectively opposed side walls 28, and a second pair of respectively opposed side walls 29a, 29b.

The side walls 28 belonging to the first pair, oriented parallel to the direction of the forwarding path 22, are spaced from each other according to a measure substantially corresponding to the width W of the bricks 8, preferably increased by the residual thickness of the strip-shaped semi-finished product 21 at the end of the thermoforming.

The forming mould 25 is combined with heating devices 30 configured to operate on the strip-shaped semi-finished product 21 near the forming mould 25 itself. The heating devices 30 can be installed in a heating station 31 positioned immediately upstream from the forming mould 25, and can for example comprise one or more heaters, for example plates incorporating electrical resistors or infrared lamps, which are suitable for operating on the strip-shaped semi-finished product 21 to bring it to a desired plasticizing temperature.

The forming mould 25 is operatively associated with forming devices configured to prepare the containers 20 by conforming the strip-shaped semi-finished product 21 against the base wall 27 and the side walls defining the forming cavity 26. These forming devices 32, in a per se known manner, can comprise for example a suction circuit converging at the base wall 27 to create a pneumatic vacuum in the forming cavity 26. Additionally or alternatively, a pressurizing circuit 33 heading a closure element 34 positionable above the forming mould 25 against the strip-shaped semi-finished product 21 can be provided in order to exert on the latter a pneumatic thrust which helps the stretching against the walls of the forming cavity 26. Additionally or alternatively, the closure element 34 may possibly carry a shaped thruster protruding from its lower surface to mechanically thrust the strip-shaped semi-finished product 21 towards the interior of the forming cavity 26.

The strip-shaped semi-finished product 21 therefore undergoes a deformation localized in the area of action of the forming mould 25, which determines its moulding in accordance with the internal geometry of the forming cavity 26. The plastic material of which the strip-shaped semi-finished product 21 is made transfers heat to the walls of the forming cavity 26, possibly subjected to the action of a cooling fluid. The consequent cooling of the strip-shaped semi-finished product 21 consolidates its structure generating the container 20 shaped according to the internal conformation of the forming cavity 26. At the end of the thermoforming, the obtained container 20 is advanced along the forwarding path 22 towards the loading station 17, possibly prior lowering the forming mould 25 to disengage the container itself from the forming cavity 26.

Advantageously, at least one of the side walls 29a, 29b belonging to the second pair, oriented perpendicularly to the direction of the forwarding path 22, is a movable wall, positionable towards and away from the opposed side wall 29a, 29b perpendicularly to its own development plane and parallel to the forwarding path 22, to vary the dimension of the forming cavity 26. In the illustrated example, the side wall 29a alone arranged rearward with respect to the direction of movement of the strip-shaped semi-finished product 21 along the forwarding path 22 is movable.

A first actuator assembly 35, comprising for example a linear actuator, operates on the movable wall 29a to move it towards and away from the opposed side wall 29b.

An electronic control unit 36, configured to receive from the measurement assembly 12 a signal indicating the measurement in length L detected on each brick 8 through a first command line 37, is operatively connected to the first actuator assembly 35 to command the movement of the movable wall 29a in response to the signal indicating the measurement in length L detected on each brick 8.

More particularly, through a second command line 38 the electronic control unit 36 is configured to command the movement of the movable wall 29a during stopping phases of the step-by-step movement, so as to move with respect to one another two side walls 29a, 29b belonging to the second pair, to position them at a mutual distance substantially corresponding to the length L measured on the brick 8 which must be received in the container 20 being made.

Each of the containers 20 thereby obtained will have therein a housing 39 delimited between a bottom wall 40, two head walls, respectively rear 41a and front 41b, orthogonal to the forwarding path 22 and facing respectively in the same and opposite direction to the direction of movement, and two sides 42 respectively opposed and parallel to the forwarding path 22. Such housing 39 has width, height and length corresponding to the width W, height H and length L of the brick 8 intended to be introduced therein.

The electronic control unit 36 supervises the operation of the entire system so that each container 20 reaches the loading station 17 in conjunction with the arrival of the brick 8 for which the container 20 itself has been made.

Along the forwarding path 22, downstream from the loading station 17 is preferably installed a sealing assembly 43 configured to apply a thermoplastic covering sheet 44 on each container 20.

Between the loading station 17 and the sealing assembly 43, respectively aligned along the forwarding path 22, an auxiliary loading assembly 45 configured to associate the introduction of a shaping insert 46 into each container 20 before this reaches the sealing assembly 43 can also be arranged.

The function of the shaping insert 46 is to promote an additional containment action on the upper part of the brick 8, once the latter is sealed within the container 20. For this purpose, each shaping insert 46 can be substantially in the form of a flat foil or slab, possibly with widenings 46a along its opposed longitudinal edges, oriented parallel to the forwarding path 22. Alternatively, shaping insert 46 can have a constant thickness along its transverse development, and be possibly provided with curvilinear joint portions created by a specific shaping unit along its opposed longitudinal edges. The curvilinear joint portions or the widenings 46a are joined to the lower surface of the shaping insert 46, i.e. the surface facing the brick 8, by arcuate joint areas with a concave profile. Alternatively, at least one of the opposed surfaces of the shaping insert 46, facing respectively towards the outside and the inside of the housing 39, may have an arched profile, respectively convex and concave.

The shaping insert 46 can be obtained by a cutting action performed on a continuous element 47, for example an extruded preform, according to pieces each having a desired length, if necessary different from each other.

The continuous element 47 can be picked by a respective auxiliary reel 48 and advanced by means of a feeding unit 49, comprising for example opposed motorized rollers, to be cut into pieces of a desired length by an auxiliary cutting unit 50 operatively arranged downstream from the feeding unit 49. By means of at least one encoder or equivalent measuring devices combined with the feeding unit 49 through a third command line 51, the electronic control unit 36 can detect, at each work cycle, the measurement in length of the continuous element 47 delivered through the feeding unit 49, and command the actuation of the auxiliary cutting unit 50 to obtain a piece of a length substantially equal to the dimension in length L of the brick 8 carried by the container 20 wherein the shaping insert 46 must be inserted.

A shaping unit (not shown) can be installed upstream or downstream from the auxiliary cutting unit 50, to properly shape, for example by a hot forming process, the continuous element 47 (and / or the shaping inserts 46 obtained from it) according to a curved profile and / or provided with the curvilinear joint portions mentioned above along the respective longitudinal edges.

The thermoplastic covering sheets 44 applied at the sealing assembly 43 are obtained from a continuous strip 52, taken from a further reel 53 rotatably supported near the sealing assembly itself. The continuous strip 52 is guided in overlap with the strip-shaped semi-finished product 21 carrying the containers 20 and dragged together with the latter with the movement imposed by the action of the forwarding devices.

The sealing assembly 43 comprises a sealing matrix 54 defining a sealing compartment 55. Preferably, the sealing compartment 55 is perimetrically delimited by a first pair of respectively opposed side abutments 56, oriented parallel to the direction of the forwarding path 22, and a second pair of respectively opposed side abutments 57a, 57b, oriented perpendicular to the direction of the forwarding path 22. At least one of the side abutments is a movable abutment 57a, positionable towards and away from the other side abutment 57b belonging to the second pair, to vary the dimension of the sealing compartment 55. In the illustrated example, the abutment 57a alone arranged rearward with respect to the direction of movement of the strip-shaped semi-finished product 21 along the forwarding path 22 is movable.

A second actuator assembly 58, comprising for example a second linear actuator, operates on the movable abutment 57a to move it parallel to the forwarding path 22, towards and away from the opposed side abutment 57b, to properly vary the dimension of the sealing compartment 55.

The electronic control unit 36 is operatively connected also to the second actuator assembly 58 through a fourth command line 59, so that the movement of the movable abutment 57a occurs in response to the signal indicating the measurement detected on each brick 8. The electronic control unit 36 is in fact suitable for commanding the movement of the movable abutment 57a preferably during forwarding phases of the step-by-step movement, so as to move with respect to one another the side abutments 57a, 57b belonging to the second pair, to position them at a mutual distance correlated to the dimension in length L of the next container 20 which must be received in the sealing assembly 43. The longitudinal dimension of the sealing compartment 55, substantially equal to the length L of the brick added to the thickness of the front 41a and rear 41b walls of the container 20, therefore is suitable for being modulated at each work cycle according to the dimensions of the container 20 which must be received each time in the sealing compartment 55 itself.

At least one sealing abutment 60, located in an overlying position with respect to the strip-shaped semi-finished product 21 and the continuous strip 52, cooperates with the sealing matrix 54 to thrust the strip-shaped semi-finished product itself against the upper edges of the side abutments 56, 57a, 57b.

The thrust action is preferably obtained following a lifting of the sealing matrix 54 after the container 20 has been brought into the sealing assembly 43 by means of the forwarding devices. The cooperation between sealing matrix 54 and sealing abutment 60 during the thrust action thereby creates a hermetic compartment for performing the pneumatic vacuum creating a sealed chamber.

Preferably, the lifting of the sealing matrix 54, actuated in conjunction with the stopping phase of the step-by-step movement, also determines the positioning of the container 20 in the matrix itself by insertion in the sealing compartment 55.

When the sealing matrix 54 comes against the sealing abutment 60, the container 20 with the respective brick 8 result enclosed in the sealing compartment 55. Before performing the sealing, the air present in the sealing compartment 55 and within the container 20 is extracted and expelled from the sealing compartment itself, for example through the sealing abutment 60 by at least one suction duct 60a. The air extracted from the container 20 and expelled from the sealing compartment 55 can optionally be replaced with an inert gas mixture, for example based on nitrogen and / or carbon dioxide, of the type commonly employed in food packaging.

At the end of the expulsion and possible replacement of the air, a sealing plate 61 carried by the abutment 60 and movable on command of one or more actuators 61a is thrust towards the sealing matrix 55. Heat produced for example by electrical resistors not shown, integrated in the sealing plate 61, determines the sealing of the container 20 by heat-sealing the continuous strip 52 against the strip-shaped semi-finished product 21, to form the thermoplastic covering sheet 44 mentioned above heat-sealed according to a closed line circumscribing the housing 39 around the edges of the container 20.

The container 20 and the brick 8 enclosed therein result therefore hermetically sealed with respect to the external environment.

The sealing compartment 55 can now be opened by lowering the sealing matrix 54, and with a new forwarding phase of the strip-shaped semi-finished product 21 the extraction of the container 20 from the sealing assembly 43 is determined.

The container 20 then reaches a cutting assembly 62 operating along the forwarding path 22 downstream from the sealing assembly 43, and configured to separate each container 20 from the strip-shaped semi-finished product 21.

Preferably, the cutting assembly 62 comprises a cutting edge 63, for example a rotating blade, translating or as in the case shown with a guillotine, operating along a cutting line transverse to the forwarding path 22 and positionable along the latter. In the illustrated example, the cutting edge 63 is positioned above the continuous strip 52 and cooperates with a thrust abutment 64 movable towards the cutting edge itself on command of a cutting actuator 65.

A third actuator assembly 66, comprising for example a third linear actuator, operates on the cutting edge 63 to move it parallel to the forwarding path 22.

The electronic control unit 36 is operatively connected also to the third actuator assembly 66 by a fifth command line 67, so that the movement of the cutting edge 63 occurs in response to the signal indicating the measurement previously detected on the brick 8 enclosed in the container 20 that has reached the cutting assembly 62. The electronic control unit 36 is in fact suitable for controlling the movement of the cutting edge 63 so as to place it in a starting position at a suitable distance from the front wall 41b of the container 20 positioned within the cutting assembly 62.

Preferably, once the positioning has been completed, during the stopping phase of the step-by-step movement, the actuation of the cutting actuator 65 is commanded, to determine by means of the cutting edge 63 the separation of any excess scrap 68 of the continuous strip 52 and of the strip-shaped semi-finished product 21. Alternatively, in order to optimize production speed, the cutting action can also be performed during the forwarding phase of the step-by-step movement of the continuous strip 52, moving the cutting assembly 65 with a speed synchronous to that of the continuous strip itself.

Once the cut is made, the third actuator assembly 66 is activated so that the cutting edge 63 is displaced along the forwarding path 22 according to a measurement correlated to the length L previously detected on the brick 8 enclosed in the container 20, so as to be positioned adjacent to the rear wall 41a of the container itself.

With a new activation of the cutting actuator 65, a new cutting action carried out adjacent to the rear wall 41a of the sealed container 20, and the definitive separation of the latter from the strip-shaped semi-finished product 21 are then determined.

The bricks 8 enclosed in the sealed containers 20 thereby obtained are suitable for being subjected to successive phases provided in the processing cycle. In particular, the bricks 8 sealed in the containers 20 can remain in stationing chambers at a controlled temperature until they must be sent to the slicing sites.

Advantageously, the bricks 8 can remain sealed without ever opening the respective containers 20 even after the extraction from the stationing chamber, during the entire transport phase up to the sites designated for performing the slicing and packaging operations for the final consumer. In fact, it will be possible to open the containers 20 immediately prior to the execution of the slicing operations, without the need for intermediate product handling required in the known art for the recovery of the containment moulds before the shipping to the slicing sites.

The containers 20 thermoformed by the thermoforming assembly 24 are suitable for being made according to an optimal conformation for the purpose of maintaining the desired geometric characteristics of the bricks 8 introduced therein. In fact, the initial thickness of the strip-shaped semi-finished product 21 can be easily chosen so as to give the obtained containers 20 a structural strength suitable for maintaining the geometric conformation of the bricks 8 unchanged over time.

The bricks 8 extracted from the containers 20 can therefore be in optimal conditions for the purpose of reducing wastes, particularly in the initial and end phases of slicing. In particular, it will be possible to improve the planarity of the opposed longitudinal ends of the brick 8, oriented orthogonally with respect to the longitudinal development of the brick 8 itself. In this way, even the first and the last slices produced by slicing may have a shape and dimensions suitable for packaging for the end user.

## Claims

1. Thermoforming assembly for making containers, comprising:
feeding devices configured to move a continuous strip-shaped semi-finished product (21) along a forwarding path (22);
at least one forming mould (25) arranged along the forwarding path (22) and defining a forming cavity (26) delimited by a base wall (27), a first pair of respectively opposed side walls (28), and a second pair of respectively opposed side walls (29a, 29b);
heating devices (30) configured to operate on the strip-shaped semi-finished product (21) near the forming mould (25);
forming devices (32) operatively associated with the forming mould (25) and configured to conform the strip-shaped semi-finished product (21) against the base wall (27) and the side walls (28, 29a, 29b) defining the forming cavity (26);
**characterized in that**
at least one of the side walls (29a, 29b) belonging to the second pair is a movable wall (29a), positionable towards and away from the other side wall (29b) belonging to the second pair, to vary the dimension of the forming cavity (26).

2. Thermoforming assembly according to claim 1, further comprising a first actuator assembly (35) operating on the movable wall (29a) to move it towards and away from the other side wall (29b) belonging to the second pair.

3. Product packaging line comprising:
a thermoforming assembly (24) according to one or more of the preceding claims;
a loading station (17) operating along the forwarding path (22) downstream from the thermoforming assembly (24), and configured for introducing a product (8) into each of said containers (20);
a sealing assembly (43) operating along the forwarding path (22) downstream from the loading station (17), and configured to apply a thermoplastic covering sheet (44) on each container (20);
wherein the sealing assembly (43) comprises;
a sealing matrix (54) defining a sealing compartment (55) perimetrically delimited by a first pair of respectively opposed side abutments (56), and a second pair of respectively opposed side abutments (57a, 57b);
a sealing abutment (60) cooperating with a sealing matrix (54) to thrust the strip-shaped semi-finished product (21) against the side abutments (56), (57a, 57b);
wherein at least one of the side abutments (57a, 57b) belonging to the second pair is a movable abutment (57a), moving towards and away from the other side abutment (57b) belonging to the second pair, to vary the dimension of the sealing compartment (55).

4. Packaging line according to claim 3, further comprising a second actuator assembly (58) operating on the movable abutment (57a) to move it towards and away from the other side abutment (57b) belonging to the second pair.

5. Packaging line according to claim 3 or 4, further comprising a cutting unit (62) operating along the forwarding path (22) downstream from the sealing assembly (43), and configured to separate each container (20) from the strip-shaped semi-finished product (21), wherein the cutting assembly (62) comprises a cutting edge (63) operating along a cutting line transverse to the forwarding path (22) and positionable along the forwarding path (22) itself.

6. Packaging line according to claim 5, further comprising a third actuator assembly (66) configured to move the cutting edge (63) parallel to the forwarding path (22).

7. Packaging line according to one or more of claims 3 to 6, further comprising an auxiliary loading assembly (45) operatively arranged along the forwarding path (22) between the loading station (17) and the sealing assembly (43), and configured to determine the introduction of a shaping insert (46) into each container (20).

8. Packaging line according to claim 7, wherein the auxiliary loading assembly (45) comprises a feeding unit (49) configured to feed a continuous element (47), and an auxiliary cutting unit (50) arranged downstream from the feeding unit (49) and configured to cut the continuous element (47) into pieces of a desired length.

9. Product packaging system comprising:
a packaging line according to one or more of claims 3 to 8;
at least one measuring assembly (12) operating along a product feeding path (10) heading the loading station (17), said measuring assembly (12) being configured to detect at least one length (L) of each product (8) sent to the packaging line (1);
an electronic control unit (36), configured to receive from the measuring assembly (12) a signal indicating the length (L) detected on each product (8), and operatively connected to the first actuator assembly (35) to command the movement of the movable wall (29a) in response to the signal indicating the length (L) detected on each product (8).

10. System according to claims 4 and 9, wherein said electronic control unit (36) is also operatively connected to the second actuator assembly (58) to command the movement of the movable abutment (57a) in response to the signal indicating the length (L) detected on each product (8).

11. System according to claim 7 and at least one of claims 9 and 10, wherein said electronic control unit (36) is also operatively connected to the third actuator assembly (66) to command the movement of the cutting edge (63) in response to the signal indicating the length (L) detected on each product (8).

12. System according to claim 8 and one or more of claims 9 to 11, further comprising measuring devices combined with the feeding unit (49), wherein the electronic control unit (36) is configured to detect a longitudinal measurement of the continuous element (47) delivered through the feeding unit (49), and command the actuation of the auxiliary cutting unit (50) to obtain a piece of a length corresponding to the length of the product (8) carried by the container (20) wherein the shaping insert (46) must be inserted.

13. Process for making containers for packaging products, comprising the actions of:
arranging along a product feeding path (10) a product (8) having predetermined width (W) and height (H);
measuring a length (L) of the product (8) arranged along the product feeding path (10);
preparing a container (20) defining a housing (39) having a width, height and length corresponding to the width (W), height (H) and length (L) of the product (8);
introducing the product (8) into the housing (39) of the container (20);
hermetically sealing the container (20),
wherein preparing the container (20) comprises making said container (20) by a thermoforming treatment of a strip-shaped semi-finished product (21) of plastic material, wherein the thermoforming treatment comprises:
moving with respect to one another the respectively opposed side walls (29a, 29b) of a forming mould (25), to position them at a mutual distance substantially corresponding to the length (L) measured on the product (8);
thermoforming the strip-shaped semi-finished product (21) into the forming mould (25).

14. Process according to claim 13, wherein hermetically sealing the container (20) comprises:
moving with respect to one another two respectively opposed side abutments (57a, 57b) of a sealing matrix (54), to position them at a mutual distance substantially corresponding to the length L measured on the pressed and shaped product (8);
positioning into the sealing matrix (54) the container (20) housing the pressed and shaped product (8);
sealing a thermoplastic covering sheet (44) against the strip-shaped semi-finished product (21) according to a closed line circumscribing said housing (39).

## Patentansprüche

1. Thermoformende Anordnung zum Herstellen von Behältern, umfassend:
Zuführvorrichtungen, die darauf ausgelegt sind, ein kontinuierliches, streifenförmiges Halbzeug (21) einen Beförderungsweg (22) entlang zu bewegen;
mindestens ein Formwerkzeug (25), das entlang des Beförderungswegs (22) angeordnet ist und eine von einer Bodenwand (27), einem ersten Paar jeweils gegenüberliegender Seitenwände (28) und einem zweiten Paar jeweils gegenüberliegender Seitenwände (29a, 29b) begrenzte Formkavität (26) definiert;
Heizvorrichtungen (30), die darauf ausgelegt sind, auf das streifenförmige Halbzeug (21) in der Nähe des Formwerkzeugs (25) zu wirken;
Formvorrichtungen (32), die operativ mit dem Formwerkzeug (25) verbunden und darauf ausgelegt sind, das streifenförmige Halbzeug (21) an die Bodenwand (27) und die Seitenwände (28, 29a, 29b) anzupassen und so die Formgebungskavität (26) zu definieren;
**dadurch gekennzeichnet, dass** mindestens eine der zu dem zweiten Paar gehörenden Seitenwände (29a, 29b) eine bewegliche Wand (29a) ist und zu der zu dem zweiten Paar gehörenden anderen Seitenwand (29b) hin und von dieser weg positioniert werden kann, um die Größe der Formgebungskavität (26) zu variieren.

2. Thermoformende Anordnung nach Anspruch 1, weiter umfassend eine erste Stellantriebanordnung (35), die auf die bewegliche Wand (29a) wirkt, um diese zu der zu dem zweiten Paar gehörenden anderen Seitenwand (29b) und von dieser weg zu bewegen.

3. Produktverpackungslinie, umfassend:
eine thermoformende Anordnung (24) nach einem oder mehreren der vorangegangenen Ansprüche;
eine Ladestation (17), die entlang des Beförderungswegs (22) abwärts von der thermoformenden Anordnung (24) im Einsatz und darauf ausgelegt ist, ein Produkt (8) in jeden der genannten Behälter (20) einzuführen;
eine Versiegelungsanordnung (43), die entlang des Beförderungswegs (22) abwärts von der Ladestation (17) im Einsatz und darauf ausgelegt ist, eine thermoplastische Deckschicht (44) auf jedem Behälter (20) anzubringen;
wobei die Versiegelungsanordnung (43) Folgendes umfasst:
eine Versiegelungsmatrix (54), die ein außen von einem ersten Paar jeweils gegenüberliegender seitlicher Auflager (56) und einem zweiten Paar jeweils gegenüberliegender seitlicher Auflager (57a, 57b) begrenztes Versiegelungsfach (55) definiert;
ein seitliches Auflager (60), das mit einer Versiegelungsmatrix (54) kooperiert, um das streifenförmige Halbzeug (21) gegen die seitlichen Auflager (56), (57a, 57b) zu schieben;
wobei mindestens eines der zu dem zweiten Paar gehörenden seitlichen Auflager (57a, 57b) ein bewegliches Auflager (57a) ist und sich zu dem zu dem zweiten Paar gehörenden anderen seitlichen Auflager (57b) hin und von diesem weg bewegt, um die Größe des Versiegelungsfachs (55) zu variieren.

4. Verpackungslinie nach Anspruch 3, weiter umfassend eine zweite Stellantriebanordnung (58), die auf das bewegliche Auflager (57a) wirkt, um dieses zu dem zu dem zweiten Paar gehörenden anderen seitlichen Auflager (57b) und von diesem weg zu bewegen.

5. Verpackungslinie nach Anspruch 3 oder 4, weiter umfassend eine Schneideinheit (62), die entlang des Beförderungswegs (22) abwärts von der Versiegelungsanordnung (43) im Einsatz und darauf ausgelegt ist, jeden Behälter (20) von dem streifenförmigen Halbzeug (21) zu trennen, wobei die Schneideinheit (62) eine entlang einer Schneidlinie quer zu dem Beförderungsweg (22) wirkende Schneidkante (63) umfasst, die entlang des Beförderungswegs (22) positionierbar ist.

6. Verpackungslinie nach Anspruch 5, weiter umfassend eine dritte Stellantriebanordnung (66), die darauf ausgelegt ist, die Schneidkante (63) parallel zu dem Beförderungsweg (22) zu bewegen.

7. Verpackungslinie nach einem oder mehreren der Ansprüche 3 bis 6, weiter umfassend eine Hilfsladeanordnung (45), die operativ entlang des Beförderungswegs (22) zwischen der Ladestation (17) und der Versiegelungsanordnung (43) angeordnet und darauf ausgelegt ist, für das Einsetzen eines Formeinsatzes (46) in jeden Behälter (20) zu sorgen.

8. Verpackungslinie nach Anspruch 7, wobei die Hilfsladeanordnung (45) eine Zuführungseinheit (49) umfasst, die darauf ausgelegt ist, ein kontinuierliches Element (47) zuzuführen, und eine Hilfsschneideinheit (50), die abwärts von der Zuführungseinheit (49) angeordnet und darauf ausgelegt ist, das kontinuierliche Element (47) in Stücke einer gewünschten Länge zu schneiden.

9. Produktverpackungssystem, umfassend:
eine Verpackungslinie nach einem oder mehreren der Ansprüche 3 bis 8;
mindestens eine Messanordnung (12), die entlang eines Produktzuführungswegs (10) zu der Ladestation (17) im Einsatz ist, wobei die genannten Messbaugruppe (12) darauf ausgelegt ist, mindestens eine Länge (L) jedes Produkts (8) zu messen, das der Verpackungslinie (1) zugeführt wird;
ein elektronisches Steuergerät (36), das darauf ausgelegt ist, von der Messanordnung (12) ein Signal zu erhalten, das die auf jedem Produkt (8) gemessene Länge (L) angibt, und operativ mit der ersten Stellantriebanordnung (35) verbunden ist, um die Bewegung der beweglichen Wand (29a) als Reaktion auf das die auf jedem Produkt (8) gemessene Länge (L) angebende Signal zu steuern.

10. System nach den Ansprüchen 4 und 9, wobei das genannte elektronische Steuergerät (36) außerdem operativ mit der zweiten Stellantriebanordnung (58) verbunden ist, um die Bewegung des beweglichen Auflagers (57a) als Reaktion auf das die auf jedem Produkt (8) gemessene Länge angebende Signal zu steuern.

11. System nach Anspruch 7 und mindestens einem der Ansprüche 9 und 10, wobei das genannte elektronische Steuergerät (36) außerdem operativ mit der dritten Stellantriebanordnung (66) verbunden ist, um die Bewegung der Schneidkante (63) als Reaktion auf das die auf jedem Produkt (8) gemessene Länge angebende Signal zu steuern.

12. System nach Anspruch 8 und einem oder mehreren der Ansprüche 9 bis 11, weiter umfassend mit der Zuführungseinheit (49) kombinierte Messvorrichtungen, wobei das elektrische Steuergerät (36) darauf ausgelegt ist, eine über die Zuführungseinheit (49) erhaltene Längsmessung des kontinuierlichen Elements (47) zu erfassen und die Betätigung der Nebenschneideinheit (50) zu steuern, um ein Stück einer Länge zu erhalten, die der Länge des von dem Behälter (20) getragenen Produkts (8) entspricht, in den der Formeinsatz (46) eingesetzt werden muss.

13. Verfahren zur Herstellung von Behältern für Verpackungsprodukte, umfassend die folgenden Vorgänge:
Anordnen eines Produkts (8) mit einer zuvor festgelegten Breite (W) und Höhe (H) entlang eines Produktzuführungswegs (10);
Messen einer Länge (L) des entlang des Produktzuführungswegs (10) angeordneten Produkts (8);
Vorbereitung eines Behälters (20), der ein Gehäuse (39) mit einer Breite, Höhe und Länge aufweist, die der Breite (W), Höhe (H) und Länge (L) des Produkts (8) entsprechen;
Einführen des Produkts (8) in das Gehäuse (39) des Behälters (20);
hermetisches Versiegeln des Behälters (20),
wobei das Vorbereiten des Behälters (20) das Herstellen des genannten Behälters (20) durch eine thermoformende Behandlung eines streifenförmigen Halbzeugs (21) aus Kunststoff umfasst, wobei die thermoformende Behandlung Folgendes umfasst:
Bewegen im Verhältnis zueinander der jeweils gegenüberliegenden Seitenwände (29a, 29b) eines Formwerkzeugs (25), um diese in einem Abstand zueinander zu positionieren, der im Wesentlichen der auf dem Produkt (8) gemessenen Länge (L) entspricht;
Thermoformen des streifenförmigen Halbzeugs (21) in dem Formwerkzeug (25).

14. Verfahren nach Anspruch 13, wobei das hermetische Versiegeln des Behälters (20) Folgendes umfasst:
Bewegen im Verhältnis zueinander von zwei jeweils gegenüberliegenden seitlichen Auflagern (57a, 57b) einer Versiegelungsmatrix (54), um diese in einem Abstand zueinander zu positionieren, der im Wesentlichen der auf dem gepressten und geformten Produkt (8) gemessenen Länge L entspricht;
Positionieren in der Versiegelungsmatrix (54) des das gepresste und geformte Produkt (8) enthaltenden Behälters (20);
Versiegeln einer thermoplastischen Deckschicht (44) gegen das streifenförmige Halbzeug (21) gemäß einer geschlossenen Linie, die das genannte Gehäuse (39) umschreibt.

## Revendications

1. Ensemble de thermoformage pour la fabrication de récipients, comprenant :
des dispositifs d'alimentation configurés pour déplacer un produit semi-fini en forme de bande continue (21) le long d'une chaîne d'acheminement (22) ;
au moins un moule de formage (25) agencé le long de la chaîne d'acheminement (22) et définissant une cavité de formage (26) délimitée par une paroi de base (27), une première paire de parois latérales respectivement opposées (28), et une seconde paire de parois latérales respectivement opposées (29a, 29b) ;
des dispositifs de chauffage (30) configurés pour agir sur le produit semi-fini en forme de bande (21) près du moule de formage (25) ;
des dispositifs de formage (32) associés de manière opérationnelle au moule de formage (25) et configurés pour adapter le produit semi-fini en forme de bande (21) contre la paroi de base (27) et les parois latérales (28, 29a, 29b) définissant la cavité de formage (26) ;
**caractérisé en ce qu'**au moins une des parois latérales (29a, 29b) appartenant à la seconde paire est une paroi mobile (29a), qui peut être positionnée vers et loin de l'autre paroi latérale (29b) appartenant à la seconde paire, pour varier la taille de la cavité de formage (26).

2. Ensemble de thermoformage selon la revendication 1, comprenant en outre un premier ensemble actionneur (35) agissant sur la paroi mobile (29a) afin de la déplacer vers et loin de l'autre paroi latérale (29b) appartenant à la seconde paire.

3. Ligne de conditionnement de produits comprenant :
un ensemble de thermoformage (24) selon une ou plusieurs des revendications précédentes ;
une station de chargement (17) agissant le long de la chaîne d'acheminement (22) en aval de l'ensemble de thermoformage (24), et configurée pour introduire un produit (8) dans chacun desdits récipients (20) ;
un ensemble d'étanchéité (43) agissant le long de la chaîne d'acheminement (22) en aval de la station de chargement (17), et configuré pour appliquer une feuille de couverture thermoplastique (44) sur chaque récipient (20) ;
où l'ensemble d'étanchéité (43) comprend :
une matrice d'étanchéité (54) définissant un compartiment d'étanchéité (55) délimité de manière périphérique par une première paire de butées latérales respectivement opposées (56), et une seconde paire de butées latérales respectivement opposées (57a, 57b) ;
une butée d'étanchéité (60) coopérant avec une matrice d'étanchéité (54) pour pousser le produit semi-fini en forme de bande (21) contre les butées latérales (56), (57a, 57b) ;
où au moins une des butées latérales (57a, 57b) appartenant à la seconde paire est une butée mobile (57a), se déplaçant vers et loin de l'autre butée latérale (57b) appartenant à la seconde paire, afin de varier la taille du compartiment d'étanchéité (55) .

4. Ligne de conditionnement selon la revendication 3, comprenant en outre un second ensemble actionneur (58) agissant sur la butée mobile (57a) pour la déplacer vers et loin de l'autre butée latérale (57b) appartenant à la seconde paire.

5. Ligne de conditionnement selon la revendication 3 ou 4, comprenant en outre une unité de coupe (62) agissant le long de la chaîne d'acheminement (22) en aval de l'ensemble d'étanchéité (43), et configurée pour séparer chaque récipient (20) du produit semi-fini en forme de bande (21), où l'ensemble de coupe (62) comprend un bord tranchant (63) agissant le long d'une ligne de coupe transversale à la chaîne d'acheminement (22) et qui pouvant positionné le long de la chaîne d'acheminement (22) elle-même.

6. Ligne de conditionnement selon la revendication 5, comprenant en outre un troisième ensemble actionneur (66) configuré pour déplacer le bord tranchant (63) parallèlement à la chaîne d'acheminement (22).

7. Ligne de conditionnement selon une ou plusieurs des revendications 3 à 6, comprenant en outre un ensemble de chargement auxiliaire (45) agencé de manière opérationnelle le long de la chaîne d'acheminement (22) entre la station de chargement (17) et l'ensemble d'étanchéité (43), et configuré pour déterminer l'introduction d'un insert de façonnage (46) dans chaque récipient (20).

8. Ligne de conditionnement selon la revendication 7, où l'ensemble de chargement auxiliaire (45) comprend une unité d'alimentation (49) configurée pour alimenter un élément continu (47), et une unité de coupe auxiliaire (50) agencée en aval de l'unité d'alimentation (49) et configurée pour couper l'élément continu (47) en pièces d'une longueur souhaitée.

9. Système de conditionnement de produits comprenant :
une ligne de conditionnement selon une ou plusieurs des revendications 3 à 8 ;
au moins un ensemble de mesure (12) agissant le long d'une chaîne d'alimentation de produits (10) guidant la station de chargement (17), ledit ensemble de mesure (12) étant configuré pour détecter au moins une longueur (L) de chaque produit (8) envoyé à la ligne de conditionnement (1) ;
une unité de commande électronique (36), configurée pour recevoir de l'ensemble de mesure (12) un signal indiquant la longueur (L) détectée su chaque produit (8), et connectée de manière opérationnelle au premier ensemble actionneur (35) pour commander le déplacement de la paroi mobile (29a) en réponse au signal indiquant la longueur (L) détectée sur chaque produit (8).

10. Système selon les revendications 4 et 9, où ladite unité de commande électronique (36) est également connectée de manière opérationnelle au second ensemble actionneur (58) pour commander le déplacement de la butée mobile (57a) en réponse au signal indiquant la longueur (L) détectée sur chaque produit (8).

11. Système selon la revendication 7 et au moins une des revendications 9 et 10, où ladite unité de commande électronique (36) est également connectée de manière opérationnelle au troisième ensemble actionneur (66) pour commander le déplacement du bord tranchant (63) en réponse au signal indiquant la longueur (L) détectée sur chaque produit (8).

12. Système selon la revendication 8 et une ou plusieurs des revendications 9 à 11, comprenant en outre des dispositifs de mesure combinés avec l'unité d'alimentation (49), où l'unité de commande électronique (36) est configurée pour détecter une mesure longitudinale de l'élément continu (47) livré à travers l'unité d'alimentation (49), et commander l'actionnement de l'unité de coupe auxiliaire (50) pour obtenir une pièce d'une longueur correspondant à la longueur du produit (8) transporté par le récipient (20) dans lequel l'insert de façonnage (46) doit être inséré.

13. Procédé de fabrication de récipients pour des produits de conditionnement, comprenant les actions consistant à :
agencer le long d'une chaîne d'alimentation de produits (10) un produit (8) ayant une largeur (W) et une hauteur (H) prédéterminées ;
mesurer une longueur (L) du produit (8) agencé le long la chaîne d'alimentation de produits (10) ;
préparer un récipient (20) définissant un logement (39) ayant une largeur, hauteur et longueur correspondant à la largeur (W), hauteur (H) et longueur (L) du produit (8) ;
introduire le produit (8) dans le logement (39) du récipient (20) ;
sceller hermétiquement le récipient (20),
où l'action de préparer le récipient (20) comprend l'action de fabriquer ledit récipient (20) par un traitement de thermoformage d'un produit semi-fini en forme de bande (21) en matière plastique, où le traitement de thermoformage comprend :
déplacer les parois latérales respectivement opposées (29a, 29b) d'un moule de formage (25) l'une par rapport à l'autre, pour les positionner à une distance réciproque correspondant sensiblement à la longueur (L) mesurée sur le produit (8) ;
soumettre au traitement de thermoformage le produit semi-fini en forme de bande (21) dans le moule de formage (25).

14. Procédé selon la revendication 13, où l'action de sceller hermétiquement le récipient (20) comprend :
déplacer deux butées latérales respectivement opposées (57a, 57b) d'une matrice d'étanchéité (54) l'une par rapport à l'autre, pour les positionner à une distance réciproque correspondant sensiblement à la longueur L mesurée sur le produit (8) pressé et façonné ;
positionner dans la matrice d'étanchéité (54) le récipient (20) en logeant le produit (8) pressé et façonné ;
sceller une feuille de couverture thermoplastique (44) contre le produit semi-fini en forme de bande (21) selon une ligne fermée qui circonscrit ledit logement (39).
